# EUROPEAN PATENT SPECIFICATION

(11) **EP 3 536 590 B1**
(45) Date of publication and mention of the grant of the patent: **05.05.2021**
(21) Application number: 19161130.0
(22) Date of filing: 06.03.2019
(51) Int. Cl.: B62K 19/16, B62K 11/04, B62M 7/04, B62K 25/28

(54) **STRADDLED VEHICLE**
GRÄTSCHSITZFAHRZEUG
VÉHICULE À ENFOURCHER

(30) Priority: 08.03.2018 JP 2018041663
(43) Date of publication of application: 11.09.2019
(73) Proprietor: YAMAHA HATSUDOKI KABUSHIKI KAISHA, Iwata-shi, Shizuoka 438-8501 (JP)
(72) Inventor: TOYOTA, Takeshi, Iwata-shi, Shizuoka, 438-8501 (JP); YAMADA, Masatoshi, Iwata-shi, Shizuoka, 438-0026 (JP)
(74) Representative: Zimmermann, Tankred Klaus

(56) References cited:
- WO-A1-2015/095966
- DE-U1- 29 508 391
- JP-A- 2000 062 673
- US-B2- 7 762 370

## Description

### TECHNICAL FIELD

The present invention relates to a straddled vehicle having a vehicle body including a main member which receives a load from at least one wheel among a plurality of wheels and which a rider straddles.

### BACKGROUND ART

A conventional straddled vehicle is described in, for example, Patent Literature 1. The straddled vehicle includes a main member, a swing arm, a rear cushion and a rear wheel. The main member includes a vehicle body frame. The vehicle body frame includes a vehicle-body-frame left part, a vehicle-body-frame right part and a cross-frame part. The vehicle-body-frame left part is the left half of the vehicle body frame. The vehicle-body-frame right part is the right half of the vehicle body frame. The cross-frame part connects the vehicle-body-frame left part and the vehicle-body-frame right part.

The swing arm is supported by the vehicle body frame so as to be rotatable around a front end part of the swing arm as seen in the leftward direction or rightward direction. The rear wheel is supported by a rear end part of the swing arm so as to be rotatable around a rear axle extending in the straddled-vehicle left-right direction. An upper end part of the rear cushion is supported by the cross-frame part. A lower end part of the rear cushion is supported by the swing arm. By this means, the rear cushion absorbs motion of the rear wheel in the straddled-vehicle up-down direction.

The prior-art document US 7 762 370 B2 discloses the preamble of claim 1.

### CITATION LIST

### PATENT LITERATURE

Patent Literature 1: Japanese Patent Application Publication No. 2014-237347

### SUMMARY OF INVENTION

### TECHNICAL PROBLEM

In recent years consideration has been given to the use of a fiber-reinforced resin to manufacture a part or all of a vehicle body frame. However, in the straddled vehicle described in Patent Literature 1, if the vehicle body frame is formed from a fiber-reinforced resin, in some cases it may be difficult to obtain sufficient rigidity in the cross-frame part that supports the upper end part of the rear cushion.

Therefore, an object of the present invention is to provide a straddled vehicle that can improve the rigidity of a shock-absorber attachment part which includes a portion formed of fiber-reinforced resin.

### SOLUTION TO PROBLEM

The inventors of the present application conducted studies regarding techniques for improving the rigidity of a shock-absorber attachment part which includes a portion formed of fiber-reinforced resin. First, the inventors of the present application investigated the reason why, with respect to the straddled vehicle described in Patent Literature 1, it is difficult to obtain sufficient rigidity in the cross-frame part that supports the upper end part of the rear cushion in a case where the vehicle body frame is manufactured using a fiber-reinforced resin. When the inventors of the present application considered the properties of fiber-reinforced resin, the inventors ascertained that a fiber-reinforced resin has properties of being strong with respect to tensile stress and weak with respect to compressive stress.

In addition, by observing the movement of the rear cushion, the inventors of the present application discovered that a force which is described hereunder is applied to the cross-frame part that supports the upper end part of the rear cushion. Specifically, the weight of the rear wheel is applied to the rear cushion when the rear cushion expands. On the other hand, when the rear cushion contracts, the weight of the rear part of the straddled vehicle is applied to the rear cushion. The weight of the rear part of the straddled vehicle is greater than the weight of the rear wheel. Therefore, a force that the cross-frame part which supports the upper end part of the rear cushion receives from the rear cushion when the rear cushion contracts is greater than a force that the cross-frame part which supports the upper end part of the rear cushion receives from the rear cushion when the rear cushion expands.

When the rear cushion contracts, the cross-frame part which supports the upper end part of the rear cushion receives a large force in the vehicle-body-frame upward direction from the rear cushion. At such time, a large compressive stress arises in the upper half of a joint portion between the cross-frame part which supports the upper end part of the rear cushion and the vehicle-body-frame left part. Similarly, a large compressive stress arises in the upper half of a joint portion between the cross-frame part which supports the upper end part of the rear cushion and the vehicle-body-frame right part. Therefore, it is preferable that the upper half of the joint portion between the cross-frame part which supports the upper end part of the rear cushion and the vehicle-body-frame left part, and the upper half of the joint portion between the cross-frame part which supports the upper end part of the rear cushion and the vehicle-body-framc right part arc reinforced.

However, reinforcing the vehicle body frame causes the weight of the vehicle body frame to increase. Therefore, the inventors of the present application considered that, rather than employing an approach that reinforces the vehicle body frame, it would be better to improve the rigidity of a shock-absorber attachment part (cross-frame part) by adopting an approach that involves reconsidering the structure for mounting the shock absorber (rear cushion). As a result, the inventors of the present application had the idea that it would suffice to have a structure in which the shock-absorber attachment part receives tensile stress from the shock absorber when the shock absorber contracts.

To solve the problem described above, the present invention adopts the following configurations.

A straddled vehicle of a first aspect, comprising:
a plurality of wheels including at least one front wheel and at least one rear wheel;
a vehicle body which supports the plurality of wheels and includes a main member, the main member being configured to receive a load from at least one wheel among the plurality of wheels and being straddled by a rider; and
a shock absorber which is supported by the vehicle body, the shock absorber being configured to support the at least one wheel so as to absorb motion of the at least one wheel in a vehicle-body up-down direction with respect to the vehicle body,
wherein the main member includes:
   a main-member body part which the rider straddles; and
   a shock-absorber attachment part which is connected to the main-member body part and has an attachment surface to which an upper end part of the shock absorber is attached, and
wherein the shock-absorber attachment part includes:
   a resin-made attachment surface part that includes the attachment surface to which the upper end part of the shock absorber is attached, the resin-made attachment surface part being formed of a fiber-reinforced resin in which resin is reinforced with fiber;
   a resin-made left side-face part constituting a left side-face part that, as seen in a vehicle-body frontward direction or backward direction, extends from the attachment surface in a vehicle-body downward direction to a location further leftward in a vehicle-body left-right direction than the center in the vehicle-body left-right direction of the attachment surface, the resin-made left side-face part including a left-side-face-part supported part connected to the main-member body part, the resin-made left side-face part being formed of a fiber-reinforced resin in which resin is reinforced with fiber; and
   a resin-made right side-face part constituting a right side-face part that, as seen in the vehicle-body frontward direction or backward direction, extends from the attachment surface in the vehicle-body downward direction to a location further rightward in the vehicle-body left-right direction than the center in the vehicle-body left-right direction of the attachment surface, the resin-made right side-face part including a right-side-face-part supported part connected to the main-member body part, the resin-made right side-face part formed of a fiber-reinforced resin in which resin is reinforced with fiber, wherein
   the shock-absorber attachment part is formed in a cylindrical shape that includes at least a part of the resin-made left side-face part and at least a part of the resin-made right side-face part, and includes a tube part having an axis line extending in the vehicle-body up-down direction as seen in the vehicle-body frontward direction or backward direction, and the resin-made attachment surface part is secured to the tube part.

According to the straddled vehicle of the first aspect, the rigidity of a shock-absorber attachment part including a portion that is formed of a fiber-reinforced resin can be improved. Fiber-reinforced resin has properties of being strong with respect to tensile stress and weak with respect to compressive stress. Further, a force that the shock-absorber attachment part receives from a shock absorber when the shock absorber contracts is greater than a force that the shock-absorber attachment part receives from the shock absorber when the shock absorber expands. Therefore, the straddled vehicle according to the first aspect has a structure in which the shock-absorber attachment part receives tensile stress from the shock absorber when the shock absorber contracts.

More specifically, the shock-absorber attachment part includes a resin-made attachment surface part, a resin-made left side-face part and a resin-made right side-face part. The resin-made attachment surface part has an attachment surface to which the upper end part of the shock absorber is attached. As seen in the vehicle-body frontward direction or backward direction, the resin-made left side-face part extends from the attachment surface in the vehicle-body downward direction to a location further leftward in the vehicle-body left-right direction than the center in the vehicle-body left-right direction of the attachment surface. As seen in the vehicle-body frontward direction or backward direction, the resin-made right side-face part extends from the attachment surface in the vehicle-body downward direction to a location further rightward in the vehicle-body left-right direction than the center in the vehicle-body left-right direction of the attachment surface. A main-member body part supports a left-side-face-part supported part at the resin-made left side-face part. Further, the main-member body part supports a right-side-face-part supported part at the resin-made right side-face part. By this means, when the shock absorber contracts, the resin-made attachment surface part receives a force in the vehicle-body upward direction from the shock absorber. The left-side-face-part supported part and the right-side-face-part supported part are supported by the main-member body part. Therefore, a spacing between the resin-made attachment surface part and the left-side-face-part supported part at the resin-made left side-face part is expansible, and a spacing between the resin-made attachment surface part and the right-side-face-part supported part at the resin-made right side-face part is expansible. As a result, tensile stress in the vehicle-body up-down direction is applied to the resin-made left side-face part and the resin-made right side-face part. Hence, according to the straddled vehicle of the first aspect, the rigidity of the shock-absorber attachment part that includes a portion formed of fiber-reinforced resin can be improved.

Note that, the main member may be a member that has a frame structure, may be a member that has a monocoque structure, or may be a member that has a semi-monocoque structure.

Further, the shock-absorber attachment part may be formed integrally with the main-member body part, or may be formed as a separate body from the main-member body part. In other words, a form in which the shock-absorber attachment part is connected to the main-member body part includes a form in which the shock-absorber attachment part is connected to the main-member body part by adopting a configuration in which the shock-absorber attachment part is formed integrally with the main-member body part, and a form in which the shock-absorber is connected to the main-member body part by adopting a configuration in which the shock-absorber attachment part that is formed as a separate body is fixed to the main-member body part by appropriate fixing means.

Further according to the straddled vehicle of the first aspect, the rigidity of the shock-absorber attachment part that includes a portion formed of fiber-reinforced resin can be further improved. More specifically, the tube part includes at least a part of the resin-made left side-face part and at least a part of the resin-made right side-face part. By this means, when the shock absorber contracts, tensile stress in the vehicle-body up-down direction also arises at portions other than the resin-made left side-face part and the resin-made right side-face part of the tube part. In other words, a force that acts in the vehicle-body upward direction is dispersed over the entire tube part. Hence, the tensile stress in the tube-part up-down direction decreases. As a result, according to the straddled vehicle of the fourth aspect, the rigidity of the shock-absorber attachment part that includes a portion formed of fiber-reinforced resin can be further improved.

A straddled vehicle of a second aspect is configured such that, in the straddled vehicle according to the first aspect,
the fiber of the resin-made left side-face part and the resin-made right side-face part extends in the vehicle-body up-down direction.

According to the straddled vehicle of the second aspect, the rigidity of the shock-absorber attachment part that includes a portion formed of fiber-reinforced resin can be further improved. When the shock absorber contracts, tensile stress in the vehicle-body up-down direction acts on the resin-made left side-face part and the resin-made right side-face part. In this regard, the fiber of the resin-made left side-face part and the fiber of the resin-made right side-face part extend in the vehicle-body up-down direction. By this means, the tensile strength in the vehicle-body up-down direction of the resin-made left side-face part and the resin-made right side-face part increases. As a result, according to the straddled vehicle of the second aspect, the rigidity of the shock-absorber attachment part that includes a portion formed of fiber-reinforced resin can be further improved.

A straddled vehicle of a third aspect is configured such that, in the straddled vehicle according to the first aspect or the second aspect,
the fiber of the resin-made attachment surface part extends in the vehicle-body left-right direction.

According to the straddled vehicle of the third aspect, the rigidity of the shock-absorber attachment part that includes a portion formed of fiber-reinforced resin can be further improved. When the shock absorber contracts, the resin-made attachment surface part is pushed in the vehicle-body upward direction. Therefore, tensile stress in the vehicle-body left-right direction is applied between a portion to which a force from the shock absorber is applied in the resin-made attachment surface part and a portion which contacts the resin-made left side-face part in the resin-made attachment surface part. Similarly, tensile stress in the vehicle-body left-right direction is applied between a portion to which a force from the shock absorber is applied in the resin-made attachment surface part and a portion which contacts the resin-made right side-face part in the resin-made attachment surface part. Therefore, the fiber of the resin-made attachment surface part extends in the vehicle-body left-right direction. By this means, the tensile strength in the vehicle-body left-right direction of the resin-made attachment surface part increases. As a result, according to the straddled vehicle of the third aspect, the rigidity of the shock-absorber attachment part that includes a portion formed of fiber-reinforced resin can be further improved.

The straddled vehicle of a fourth aspect is configured such that, in the straddled vehicle according to any of the first to third aspects,
the main-member body part includes: a main-member body-part left part that is a portion located further leftward in a main-member left-right direction than the center in the main-member left-right direction, the main-member body-part left part supporting the left-side-face-part supported part, and a main-member body-part right part that is a portion located further rightward in the main-member left-right direction than the center in the main-member left-right direction, the main-member body-part right part supporting the right-side-face-part supported part.

According to the straddled vehicle of the fourth aspect, the rigidity of the main member can be improved. More specifically, the shock-absorber attachment part is supported by the main-member body-part left part and the main-member body-part right part. That is, the shock-absorber attachment part connects the main-member body-part left part and the main-member body-part right part. By this means, the main-member body-part left part and the main-member body-part right part are restricted from deforming in such a way that the spacing between the main-member body-part left part and the main-member body-part right part changes. As a result, according to the straddled vehicle of the fifth aspect, the rigidity of the main frame can be improved.

The straddled vehicle of a fifth aspect is configured such that, in the straddled vehicle according to any of the first to fourth aspects, the resin-made left side-face part and the resin-made right side-face part each extend along a direction in which the shock absorber expands and contracts as seen in the vehicle-body leftward direction or rightward direction.

According to the straddled vehicle of the fifth aspect, the rigidity of the shock-absorber attachment part that includes a portion formed of fiber-reinforced resin can be further improved.

The straddled vehicle of a sixth aspect is configured such that, in the straddled vehicle according to the fifth aspect, the attachment surface expands in a direction orthogonal to a direction in which the shock absorber expands and contracts.

According to the straddled vehicle of the sixth aspect, the rigidity of the shock-absorber attachment part that includes a portion formed of fiber-reinforced resin can be further improved.

The straddled vehicle of an seventh aspect is configured in accordance with the straddled vehicle according to any of the first to sixth aspects, and further includes:
a bracket provided at an upper end part of the shock absorber and being attachable to the attachment surface.

According to the straddled vehicle of the seventh aspect, since the upper end part of the shock absorber is attached to the attachment surface through a bracket, for example, the upper end part of the shock absorber can be attached in a displaceable manner to the attachment surface.

The straddled vehicle of a eighth aspect is configured such that, in the straddled vehicle according to any of the first to seventh aspects, as seen in the vehicle-body frontward direction or backward direction, a length in the vehicle-body left-right direction of the attachment surface is shorter than a length in the vehicle-body left-right direction of the main-member body part.

The above described purposes and other purposes, features, aspects, and benefits will become further apparent from the following detailed description of embodiments which is to be presented in relation to the appended drawings. The invention is defined by the appended claims.

As used herein, the term "and/or" includes any and all combinations of one or more of the associated listed items.

It will be further understood that the terms "including," "comprising" or "having" and variations thereof when used in this specification, specify the presence of stated features, steps, operations, elements, components, and/or their equivalents but do not preclude the presence or addition of one or more other features, steps, operations, elements, components, and/or groups thereof.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion.

In the following description, for purposes of explanation, numerous specific details are set forth in order to provide a thorough understanding of the present invention. It will be evident, however, to one skilled in the art that the present invention may be practiced without these specific details. The present disclosure is to be considered as an exemplification of the invention, and is not intended to limit the invention to the specific embodiments illustrated by the figures or description below.

### EFFECTS OF INVENTION

The present invention can improve the rigidity of a shock-absorber attachment part that includes a portion formed of fiber-reinforced resin.

### BRIEF DESCRIPTION OF DRAWINGS

[FIG. 1] FIG. 1 is a view of a straddled vehicle 1 as seen in a straddled-vehicle 1 rightward direction, an exploded perspective view of a vehicle body 2 and a shock absorber 62 of the straddled vehicle 1, and a sectional view taken along X-X in the exploded perspective view.
[FIG. 2] FIG. 2 is an exploded perspective view of the vehicle body 2 and an electric motor control section 10.
[FIG. 3] FIG. 3 is a top view of the vehicle body 2.

### DESCRIPTION OF EMBODIMENTS

### [General configuration]

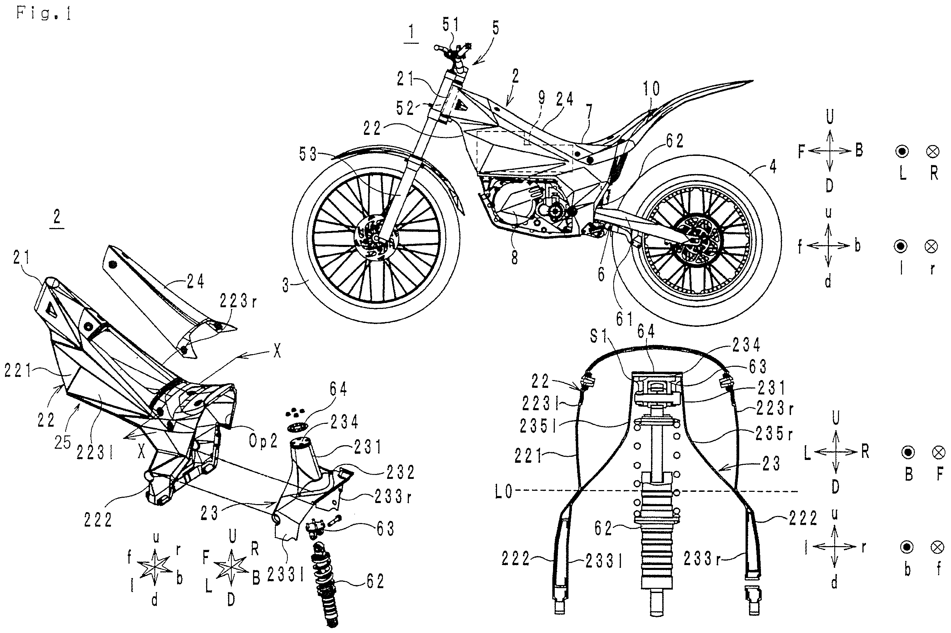

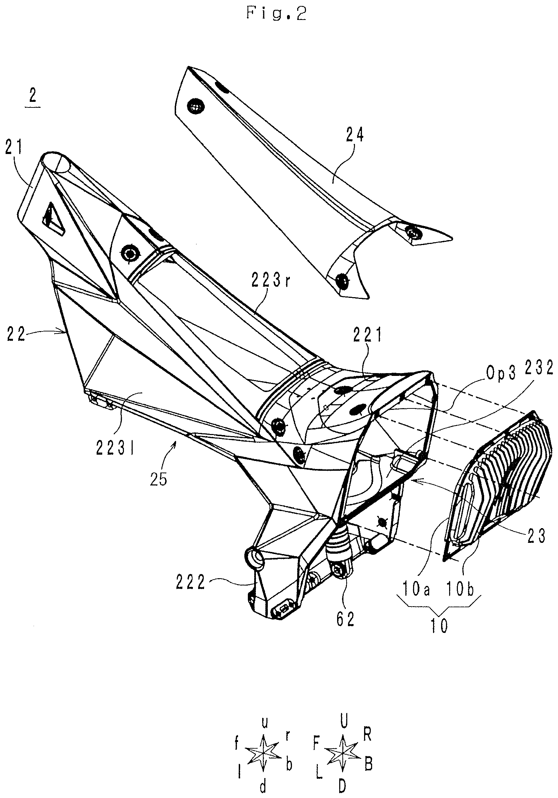

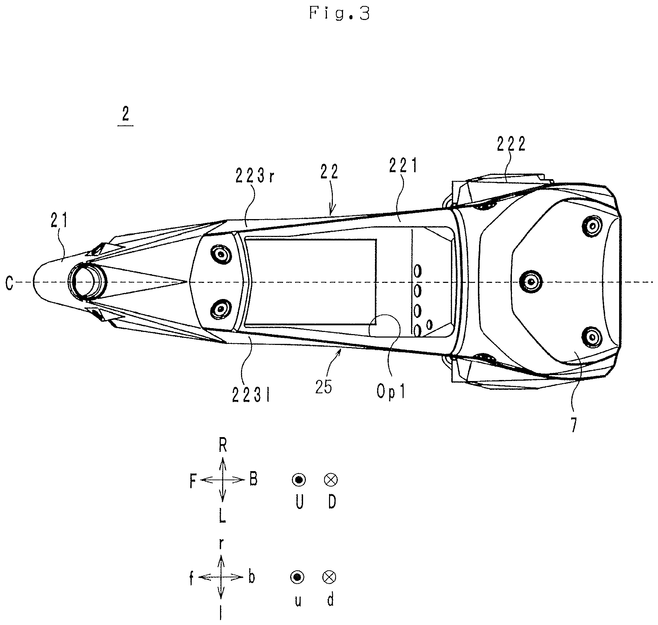

Hereinafter, a general configuration of a straddled vehicle 1 according to one embodiment of the present invention will be described with reference to the drawings. In the present embodiment, as an example of the straddled vehicle, a two-wheel leaning vehicle including a vehicle body which is capable of leaning, a front wheel, and a rear wheel will be exemplified. The straddled vehicle is a vehicle for motorcycle trials. FIG. 1 is a view of the straddled vehicle 1 as seen in the straddled-vehicle 1 rightward direction, an exploded perspective view of a vehicle body 2 and a shock absorber 62 of the straddled vehicle 1, and a sectional view taken along X-X in the exploded perspective view. FIG. 2 is an exploded perspective view of the vehicle body 2 and an electric motor control section 10. FIG. 3 is a top view of the vehicle body 2.

Hereinafter, the straddled-vehicle 1 frontward direction is referred to as a frontward direction "F". The straddled-vehicle 1 backward direction is referred to as a backward direction "B". The straddled-vehicle 1 leftward direction is referred to as a leftward direction "L". The straddled-vehicle 1 rightward direction is referred to as a rightward direction "R". The straddled-vehicle 1 upward direction is referred to as an upward direction "U". The straddled-vehicle 1 downward direction is referred to as a downward direction "D". The straddled-vehicle 1 front-back direction is referred to as a front-back direction "FB". The straddled-vehicle 1 left-right direction is referred to as a left-right direction "LR". The straddled-vehicle 1 up-down direction is referred to as an up-down direction "UD". The straddled-vehicle 1 frontward direction refers to a frontward direction when taking a rider who is astride the straddled vehicle 1 as a reference. The straddled-vehicle 1 backward direction refers to a backward direction when taking a rider who is astride the straddled vehicle 1 as a reference. The straddled-vehicle 1 leftward direction refers to a leftward direction when taking a rider who is astride the straddled vehicle 1 as a reference. The straddled-vehicle 1 rightward direction refers to a rightward direction when taking a rider who is astride the straddled vehicle 1 as a reference. The straddled-vehicle 1 upward direction refers to an upward direction when taking a rider who is astride the straddled vehicle 1 as a reference. The straddled-vehicle 1 downward direction refers to a downward direction when taking a rider who is astride the straddled vehicle 1 as a reference.

Further, in the straddled vehicle 1, the vehicle body 2 can lean in the leftward direction L or the rightward direction R. In a case where the vehicle body 2 leans in the leftward direction L or rightward direction R, the vehicle-body 2 up-down and left-right directions do not match the straddled-vehicle 1 up-down direction UD and left-right directions LR, respectively. On the other hand, the vehicle-body 2 up-down and left-right directions in an upright state match the straddled-vehicle 1 up-down direction UD and left-right direction LR, respectively. Hereinafter, the vehicle-body 2 frontward direction is referred to as a frontward direction "f". The vehicle-body 2 backward direction is referred to as a backward direction "b". The vehicle-body 2 leftward direction is referred to as a leftward direction "l". The vehicle-body 2 rightward direction is referred to as a rightward direction "r". The vehicle-body 2 upward direction is referred to as an upward direction "u". The vehicle-body 2 downward direction is referred to as a downward direction "d". The vehicle-body 2 front-back direction is referred to as a front-back direction "fb". The vehicle-body 2 left-right direction is referred to as a left-right direction "lr". The vehicle-body 2 up-down direction is referred to as an up-down direction "ud".

In the present specification, an axis or a member extending in the front-back direction does not necessarily refer to only an axis or a member that is parallel with the front-back direction. An axis or a member extending in the front-back direction refers to an axis or a member that is inclined within a range of ±45° with respect to the front-back direction. Similarly, herein, an axis or a member extending in the up-down direction refers to an axis or a member that is inclined within a range of ±45° with respect to the up-down direction. Likewise, an axis or a member extending in the left-right direction refers to an axis or a member that is inclined within a range of ±45° with respect to the left-right direction. Further, the term "an upright state of the vehicle body 2" means a state in which the front wheel is neither steered nor leaned, without a rider riding on and without fuel loaded in the straddled vehicle 1.

In the present specification, when any two members are defined as a first member and a second member, the relation between the any two members has the meaning as described hereunder. Note that, the first member and the second member mean members constituting the straddled vehicle 1.

In the present specification, the phrase "a first member is supported by a second member" includes a case in which the first member is attached to the second member so as to be immovable with respect to the second member (that is, is secured thereto), and a case in which the first member is attached to the second member so as to be movable with respect to the second member. Further, the phrase "the first member is supported by the second member" includes both of a case in which the first member is directly attached to the second member, and a case in which the first member is attached to the second member via a third member.

In the present specification, the phrase "the first member and the second member which are aligned in the front-back direction" shows the following state. That is a state in which when the first member and the second member are seen in a direction perpendicular to the front-back direction, both of the first member and the second member are disposed on any straight line extending in the front-back direction. In the present specification, the phrase "the first member and the second member which are aligned in the front-back direction when seen in the up-down direction" shows the following state. That is a state in which when the first member and the second member are seen in the up-down direction, both of the first member and the second member are disposed on any straight line extending in the front-back direction. In this case, when the first member and the second member are seen in the left-right direction which is different from the up-down direction, either one of the first member and the second member may not be disposed on any straight line extending in the front-back direction. Note that the first member and the second member may be in contact with each other. The first member and the second member may also be apart from each other. A third member may be present between the first member and the second member. This definition will be applied to directions other than the front-back direction.

In the present specification, the phrase "the first member is disposed further forward than the second member" refers to the following state. The first member is disposed in front of a plane which passes through the front end of the second member and is orthogonal to the front-back direction. In this case, the first member and the second member may be aligned in the front-back direction, and may not be aligned. This definition will apply to directions other than the front-back direction.

In the present specification, the phrase "the first member is disposed in front of the second member" refers to the following state. At least a part of the first member is disposed in a region through which the second member passes when moving forward in parallel. Thus, the first member may be accommodated in the region through which the second member passes when moving forward in parallel, or protrudes from the region through which the second member passes when moving forward in parallel. In this case, the first member and the second member are aligned in the front-back direction. This definition will be applied to directions other than the front-back direction.

In the present specification, the phrase "the first member is disposed in front of the second member as seen in the left-right direction" refers to the following state. The first member and the second member are aligned in the front-back direction as seen in the left-right direction, and a part of the first member opposed to the second member is disposed in front of the second member as seen in the left-right direction. In this definition, the first member and the second member may not be aligned in the front-back direction in a three dimensional space. This definition will be applied to directions other than the front-back direction.

In the present specification, unless otherwise stated, each part of the first member is defined as follows. Note that the term "first member" means a member constituting the straddled vehicle 1. A front part of the first member means a front half of the first member. A rear part of the first member means a back half of the first member. A left part of the first member means a left half of the first member. A right part of the first member means a right half of the first member. An upper part of the first member means an upper half of the first member. A lower part of the first member means a lower half of the first member. The upper end of the first member means an end of the first member in the upward direction. The lower end of the first member means an end of the first member in the downward direction. The front end of the first member means an end of the first member in the frontward direction. The rear end of the first member means an end of the first member in the backward direction. The left end of the first member means an end of the first member in the leftward direction. The right end of the first member means an end of the first member in the rightward direction. The upper end part of the first member means the upper end and its vicinity of the first member. The lower end part of the first member means the lower end and its vicinity of the first member. The front end part of the first member means the front end and its vicinity of the first member. The rear end part of the first member means the rear end and its vicinity of the first member. The left end part of the first member means the left end and its vicinity of the first member. The right end part of the first member means the right end and its vicinity of the first member.

As shown in FIG. 1, a straddled vehicle 1 includes a vehicle body 2, a front wheel 3, a rear wheel 4, a steering mechanism 5, a suspension 6, a seat 7, a power unit 8, a battery 9, and an electric motor control unit 10. The vehicle body 2 leans in the leftward direction L when it turns to the leftward direction L. The vehicle body 2 leans in the rightward direction R when it turns to the rightward direction R. The vehicle body 2 supports the front wheel 3 and the rear wheel 4 as a plurality of wheels. The vehicle body 2 includes fiber-reinforced resins in which resin (for example, epoxy resin, vinyl ester, phenol resin, polyamide, polypropylene, polyphenylene sulfide, etc.) is reinforced by fibers (for example, carbon fiber, glass fiber, etc.). Expressed in another way, the vehicle body 2 includes a portion formed of fiber-reinforced resin. In the present embodiment, the vehicle body 2 is formed of a carbon fiber-reinforced resin in which resin is reinforced by a fiber sheet including carbon fibers. The vehicle body 2 includes a main member 25. The main member 25 receives a load from at least one wheel among the plurality of wheels (front wheel 3 and rear wheel 4). A rider of the straddled vehicle 1 straddles the main member 25 when driving the straddled vehicle 1. The main member 25 includes a head pipe 21, a main-member body part 22, a shock-absorber attachment part 23 and a lid part 24.

The head pipe 21 is disposed at a front end part of the vehicle body 2. The head pipe 21 is a cylinder having a center axis extending in the up-down direction ud. However, the head pipe 21 is disposed so as to be slightly inclined with respect to the up-down direction ud such that the upper end part of the head pipe 21 is located further backward than the lower end part of the head pipe 21 in the backward direction as seen in the leftward direction l or the rightward direction r.

The main-member body part 22 is disposed behind the head pipe 21 as seen in the leftward direction l or the rightward direction r. The head pipe 21 and the main-member body part 22 are formed as a single member. The phrase "a plurality of structures are formed as a single member" means that a plurality of structures are molded by a single die. The main-member body part 22 has a shape which is obtained by rotating a letter L clockwise by 90°, as seen in the leftward direction l. The main-member body part 22 includes a main-member body-part upper part 221 and a main-member body-part lower part 222. The main-member body-part upper part 221 forms, as shown in FIG. 2, a box extending in the front-back direction fb along with the shock-absorber attachment part 23, the lid part 24, and the electric motor control section 10 which are to be described below. The main-member body-part upper part 221 is a portion that contributes to the formation of the box in the main-member body part 22.

The main-member body-part lower part 222 extends from the rear end part of the main-member body-part upper part 221 in the downward direction d. The main-member body-part lower part 222 is a portion located below a box that the main-member body-part upper part 221, the shock-absorber attachment part 23, the lid part 24 and the electric motor control unit 10 form in the main-member body part 22. That is, the main-member body-part lower part 222 is a portion that does not contribute to formation of the box.

Moreover, as shown in FIG. 3, an opening Op1 is provided in the main-member body-part upper part 221. The opening Op1 is provided on the upper face of the main-member body-part upper part 221. The opening Op1 has a rectangular shape which has a long side extending in the front-back direction fb and a short side extending in the left-right direction lr as seen in the downward direction d. As a result, the inside of the main-member body-part upper part 221 and the outside of the main-member body part 22 are connected through the opening Op1.

Moreover, as shown in FIG. 1, an opening Op2 is provided in the main-member body part 22. The opening Op2 is provided in a rear end part of the main-member body part 22. As a result, the inside of the main-member body part 22 and the outside of the main-member body part 22 are connected through the opening Op2.

Further, the main-member body part 22 includes a main-member body-part left part 223l and a main-member body-part right part 223r. The main-member body-part left part 223l is a portion that is located further leftward in the left-right direction than the center (center line C) in the left-right direction lr of the main-member body part 22. Therefore, the main-member body-part left part 2231 includes a left part of the main-member body-part upper part 221 and a left part of the main-member body-part lower part 222. The main-member body-part right part 223r is a portion that is located further leftward in the left-right direction than the center (center line C) in the left-right direction lr of the main-member body part 22. Therefore, the main-member body-part right part 223r includes a right part of the main-member body-part upper part 221 and a right part of the main-member body-part lower part 222.

The lid part 24 is attached to the upper face of the main-member body part 22, thereby covering the opening Op1. The lid part 24 has a structure which is detachable with respect to the main-member body part 22. In the present embodiment, the lid part 24 is secured to the main-member body part 22 with four screws.

The shock-absorber attachment part 23 supports an upper end part of the shock absorber 62 to be described below. The shock-absorber attachment part 23 is not formed as a single body with the main-member body part 22. That is, the shock-absorber attachment part 23 is a different member from the main-member body part 22.

The shock-absorber attachment part 23 includes a tube part 231 as a resin-made tube part, a bottom face part 232 as a resin-made bottom face part, a left-side-face-part supported part 2331 as a resin-made left-side-face-part supported part, a right-side-face-part supported part 233r as a resin-made right-side-face-part supported part, and an attachment surface part 234 as a resin-made attachment surface part. The tube part 231 has a cylindrical shape which has an axis line extending in the up-down direction ud as seen in the frontward direction f or the backward direction b. The axis line of the tube part 231 is slightly inclined with respect to the up-down direction ud such that a portion that passes through the upper end of the tube part 231 is located further forward than a portion which passes through the lower end of the tube part 231 as seen in the leftward direction l or the rightward direction r.

Moreover, the tube part 231 has an annular shape in a section orthogonal to the center axis. The term "annular" means a shape which connects over the entire perimeter without any break, such as a circle, an ellipse, a rectangle, etc. Therefore, in the shock-absorber attachment part 23, a portion which does not form an annular shape in a section orthogonal to the center axis is not included in the tube part 231. In the sectional view of FIG. 1, the tube part 231 is a portion located above the straight line L0 in the shock-absorber attachment part 23. Further, the diameter of the tube part 231 is not uniform. The diameter of the tube part 231 increases from its upper end toward its lower end.

The attachment surface part 234 is provided at the upper end of the tube part 231. The attachment surface part 234 covers the opening located at the upper end of the tube part 231. Therefore, the attachment surface part 234 has a disc shape. The attachment surface part 234 has, as shown in the sectional view in FIG. 1, an attachment surface S1 which faces in the downward direction d. That is, the attachment surface part 234 has the attachment surface S1 which expands in a direction orthogonal to the up-down direction ud. In other words, the attachment surface part 234 has the attachment surface S1 which expands in a direction orthogonal to the expansion and contraction direction of the shock absorber 62 to be described below. As seen in the vehicle-body 2 frontward direction f or backward direction b, a length in the vehicle-body 2 left-right direction lr of the attachment surface S1 is shorter than a length in the vehicle-body 2 left-right direction lr of the main-member body part 22. The attachment surface S1 includes a region at which the upper end part of the shock absorber 62 is attached. The attachment surface S1 extends along the fiber direction of the attachment surface part 234 to be described below.

The bottom face part 232 is provided at the lower end part of the tube part 231. The bottom face part 232 extends from the lower end part of the tube part 231 in the backward direction b. The bottom face part 232 has a plate shape. Thus, the bottom face part 232 has an upper face facing in the upward direction u.

The left-side-face-part supported part 2331 extends from the left part of the lower end part of the tube part 231 and the left part of the bottom face part 232 in the downward direction d. Therefore, the left-side-face-part supported part 2331 is located further downward in the downward direction and further leftward in the leftward direction than the attachment surface part 234. The left-side-face-part supported part 2331 is a portion located further downward in the downward direction than the tube part 231 and the bottom face part 232 in the shock-absorber attachment part 23. In the sectional view of FIG. 1, the left-side-face-part supported part 233l is a portion located below the straight line L0 in the shock-absorber attachment part 23. The left-side-face-part supported part 2331 has a face facing in the upper-left direction lu and a face facing in the leftward direction 1.

The right-side-face-part supported part 233r extends from the right part of the lower end part of the tube part 231 and the right part of the bottom face part 232 in the downward direction d. Therefore, the right-side-face-part supported part 233r is located further downward in the downward direction and further rightward in the rightward direction than the attachment surface part 234. The right-side-face-part supported part 233r is a portion located further downward in the downward direction than the tube part 231 and the bottom face part 232 in the shock-absorber attachment part 23. In the sectional view of FIG. 1, the right-side-face-part supported part 233r is a portion located below the straight line L0 in the shock-absorber attachment part 23. The right-side-face-part supported part 233r has a face facing in the upper-right direction ru and a face facing in the rightward direction r.

The shock-absorber attachment part 23 having the above described configuration includes, as shown in the sectional view of FIG. 1, an attachment surface part 234, a left side-face part 2351, and a right side-face part 235r as seen in the frontward direction f or the backward direction b. The left side-face part 2351 extends from the attachment surface S1 in the downward direction d to a location in the leftward direction from the center in the left-right direction lr of the attachment surface S1. In other words, the left side-face part 235l has a face that extends in the downward direction d from the attachment surface S1 to a location further leftward in the left-right direction than the center in the left-right direction lr of the attachment surface S1. The face extends along the fiber direction of the left side-face part 2351 to be described below. In the present embodiment, the left side-face part 2351 extends from the left end of the attachment surface part 234 in the downward direction d. The left side-face part 235l extends along a direction in which the shock absorber 62 to be described below expands and contracts as seen in the leftward direction l or the rightward direction r. The left side-face part 2351 includes a part of the left part of the tube part 231 and the left-side-face-part supported part 2331.

The right side-face part 235r extends from the attachment surface S1 in the downward direction d to a location further rightward in the left-right direction than the center in the left-right direction lr of the attachment surface S1. Expressed in another way, the right side-face part 235r has a face that extends in the downward direction d from the attachment surface S1 to a location further rightward in the left-right direction than the center in the left-right direction lr of the attachment surface S1. The face extends along the fiber direction of the right side-face part 235r to be described below. In the present embodiment, the right side-facc part 235r extends from the right end of the attachment surface part 234 in the downward direction d. The right side-face part 235r extends along a direction in which the shock absorber 62 to be described below expands and contracts as seen in the leftward direction l or the rightward direction r. The right side-face part 235r includes a part of the right part of the tube part 231 and the right-side-face-part supported part 233r. As a result, the attachment surface part 234, the left side-face part 2351, and the right side-face part 235rhave a U-shape which is inverted upside down.

Moreover, the fibers of the attachment surface part 234 extend in the left-right direction. Therefore, the fiber direction of the attachment surface part 234 is the left-right direction. The fibers of the left side-face part 2351 extend in the up-down direction. The fiber direction of the left side-face part 2351 is the up-down direction. The fibers of the right side-face part 235r extend in the up-down direction. The fiber direction of the right side-face part 235r is the up-down direction. The fiber direction means the longitudinal direction of a fiber. In a fiber sheet which is formed in a sheet shape by using fibers, the longitudinal direction of a fiber included in the fiber sheet corresponds to the fiber direction. In the case of a sheet-like member in which fibers are disposed in an intersecting manner, each of the directions of the intersecting fibers is referred to as the fiber direction.

The shock-absorber attachment part 23 configured as described above is attached to the rear part of the main-member body-part upper part 221 and the main-member body-part lower part 222. More precisely, the main-member body-part left part 2231 supports the left-side-face-part supported part 2331 at the main-member body-part lower part 222. The face facing in the leftward direction l and the face facing in the upper-left direction lu of the left-side-face-part supported part 233l are secured respectively to the face facing in the rightward direction r and the face facing in the lower-right direction rd of the main-member body-part left part 2231 with an adhesive. Further, the main-member body-part right part 223r supports the right-side-face-part supported part 233r at the main-member body-part lower part 222. The face facing in the rightward direction r and the face facing in the upper-right direction ru of the right-side-face-part supported part 233r are secured respectively to the face facing in the leftward direction l and the face facing in the lower-left direction ld of the main-member body-part right part 223r with an adhesive. As a result, as shown in FIG. 2, the opening Op3 is formed in the rear end part of the main-member body-part upper part 221. The opening Op3 is formed by being surrounded by the main-member body-part left part 223l, the main-member body-part right part 223r and the bottom face part 232.

A battery 9 is a power source of the straddled vehicle 1. The battery 9 is a secondary battery, for example, a lithium ion battery. The battery 9 has a cuboid shape. The battery 9 is accommodated in the main-member body part 22. The rider can attach the battery 9 to the main-member body part 22 through the opening Op1. Moreover, the rider can detach the battery 9 from the main-member body part 22 through the opening Op1.

The power unit 8 is supplied with power from the battery 9 and generates driving force that causes the rear wheel 4, to be described later, to rotate. The power unit 8 is retained by the main-member body part 22. Specifically, the power unit 8 is disposed below the main-member body part 22. Further, the power unit 8 is retained by the lower face of the main-member body part 22. Thus, the power unit 8 is located below the battery 9. The power unit 8 is, for example, a combination of an electric motor and a reduction gear.

The steering mechanism 5 is disposed around the head pipe 21. The steering mechanism 5 steers the front wheel 3 in response to the operation by a rider. The steering mechanism 5 includes a handlebar 51, a steering shaft 52, and a front fork 53. The handlebar 51 is operated by the rider. The steering shaft 52 is inserted into the head pipe 21. As a result, the steering shaft 52 is supported by the vehicle body 2 so as to be rotatable around the center axis of the steering shaft 52 by the rider operating the handlebar 51.

The front fork 53 is secured to the lower end of the steering shaft 52. The front fork 53 has a structure which is branched to the left and right as seen in the frontward direction f or the backward direction b. The front wheel 3 is supported at the lower end part of the front fork 53 so as to be rotatable around the front axle. Thereby, the rider can steer the front wheel 3 by operating the handlebar 51. That is, the front wheel 3 is a steerable wheel.

The suspension 6 is supported by the vehicle body 2 and supports the rear wheel 4. The suspension 6 includes a swing arm 61 and a shock absorber 62. The swing arm 61 extends in the backward direction from the main-member body-part lower part 222 as seen in the leftward direction l or the rightward direction r. The swing arm 61 is supported by the main-member body part 22 so as to be swingable around the axis passing the front end part of the swing arm 61 in the left-right direction lr. As a result, the rear end part of the swing arm 61 can move in the up-down direction ud with respect to the main-member body part 22.

The rear wheel 4 is the driving wheel of the straddled vehicle 1. Therefore, the rear wheel 4 is rotated by the driving force generated by the power unit 8. The rear wheel 4 is supported by the vehicle body 2 via the swing arm 61. Specifically, the rear wheel 4 is supported at a rear end part of the swing arm 61 so as to be rotatable around the rear axle. Therefore, the rear wheel 4 can move in the up-down direction ud with respect to the main-member body part 22 as the result of the swing arm 61 swinging.

The shock absorber 62 is disposed behind the battery 9 and in front of the electric motor control unit 10 to be described below. The shock absorber 62 supports the rear wheel 4 so as to absorb motion of the rear wheel 4 in the up-down direction ud with respect to the vehicle body 2. The upper end part of the shock absorber 62 is supported at the main-member body part 22. To be more specific, the straddled vehicle 1 further includes a bracket 63 and a plate 64. The plate 64 is disposed on the upper face of the attachment surface part 234. The plate 64 is separated from the main-member body part 22 in the up-down direction ud, as shown in the sectional view in FIG. 1. The bracket 63 is disposed on the attachment surface S1 of the attachment surface part 234. Here, the bracket 63 has a flat surface that overlaps with the attachment surface S1. That is, the bracket 63 disposed on the attachment surface S1 is in surface contact with the attachment surface S1. The bracket 63 and the plate 64 are secured to the attachment surface part 234 with a screw. The bracket 63 supports the upper end part of the shock absorber 62 such that the shock absorber 62 can rotate around a shaft extending in the left-right direction lr. That is, the bracket 63 is provided at the upper end part of the shock absorber 62, and is attached to the attachment surface S1. In this way, the shock absorber 62 is supported by the vehicle body 2 at the attachment surface part 234 via the bracket 63. The lower end part of the shock absorber 62 is supported by the swing arm 61. In this way, the shock absorber 62 supports the rear wheel 4 via the swing arm 61. The shock absorber 62 is a combination of a damper and a spring, and can expand and contract in the up-down direction ud. The shock absorber 62 absorbs the motion in the up-down direction ud of the rear wheel 4 with respect to the vehicle body 2 by absorbing swinging of the swing arm 61 with respect to the vehicle body 2.

The seat 7 is supported at the rear part of the main-member body part 22. A rider sits on the seat 7. Thus, the rider straddles the main-member body part 22.

The electric motor control unit 10 controls an electric motor (not shown) of the power unit 8 based on the operation of the throttle (not shown) by the rider. Specifically, as shown in FIG. 2, the electric motor control unit 10 includes a control circuit 10a and a heat sink 10b. The control circuit 10a is made up of, for example, a circuit board, an IC, and an electronic component. The control circuit 10a determines the current to be fed to the electric motor based on a throttle signal output from a throttle sensor (not shown) for detecting the rotational angle of a right grip (not shown). The control circuit 10a increases the current to be supplied from the battery 9 to the electric motor as the rotational angle of the right grip indicated by the throttle signal increases. The heat sink 10b is attached behind the control circuit 10a. The heat sink 10b dissipates heat generated by the control circuit 10a into the air. The heat sink 10b is secured to the rear end of the main-member body-part upper part 221 and the rear end of the bottom face part 232 so as to cover the opening Op3. In this way, the power unit 8, the electric motor control unit 10, the main-member body part 22, the shock-absorber attachment part 23 and the lid part 24 form a closed space. Further, since the control circuit 10a is located on the front face of the heat sink 10b, the control circuit 10a is disposed in the closed space.

### [EFFECTS]

According to the straddled vehicle 1, the rigidity of the shock-absorber attachment part 23 that includes a portion formed of fiber-reinforced resin can be improved. Fiber-reinforced resin has properties of being strong with respect to tensile stress and weak with respect to compressive stress. Further, a force that the shock-absorber attachment part 23 receives from the shock absorber 62 when the shock absorber 62 contracts is greater than a force that the shock-absorber attachment part 23 receives from the shock absorber 62 when the shock absorber 62 expands. Therefore, the straddled vehicle 1 has a structure in which the shock-absorber attachment part 23 receives tensile stress from the shock absorber 62 when the shock absorber 62 contracts.

More specifically, the shock-absorber attachment part 23 includes the attachment surface part 234, the left side-face part 2351 and the right side-face part 235r. The attachment surface part 234 has the attachment surface S1 that faces in the downward direction d. As seen in the frontward direction f or the backward direction b, the left side-face part 235l extends from the attachment surface S1 in the downward direction d to a location further leftward in the vehicle-body left-right direction than the center in the left-right direction lr of the attachment surface S1. As seen in the frontward direction f or the backward direction b, the right side-face part 235r extends from the attachment surface S1 in the downward direction d to a location further rightward in the vehicle-body left-right direction than the center in the left-right direction lr of the attachment surface S1. The main-member body part 22 supports the left-side-face-part supported part 2331 that is located further downward than the attachment surface S1 at the left side-face part 235l. Further, the main-member body part 22 supports the right-side-face-part supported part 233r that is located further downward than the attachment surface S1 at the right side-face part 235r.

Here, the attachment surface part 234 receives a force in the upward direction u from the shock absorber 62 when the shock absorber 62 contracts. The aforementioned force acts with respect to the attachment surface part 234 so as to widen the spacing between the attachment surface part 234 and the left-side-face-part supported part 233l, and so as to also widen the spacing between the attachment surface part 234 and the right-side-face-part supported part 233r. By this means, a tensile stress in the up-down direction ud is applied to the left side-face part 2351 and the right side-face part 235r. Therefore, according to the straddled vehicle 1, the rigidity of the shock-absorber attachment part 23 that includes a portion formed of fiber-reinforced resin can be improved.

According to the straddled vehicle 1, the rigidity of the shock-absorber attachment part 23 that includes a portion formed of fiber-reinforced resin can be further improved. When the shock absorber 62 contracts, a tensile stress in the up-down direction ud acts on the left side-face part 2351 and the right side-face part 235r. Therefore, the fiber of the left side-face part 2351 and the fiber of the right side-face part 235r extend in the up-down direction ud. By this means, the tensile strength in the up-down direction ud of the left side-face part 235l and the right side-face part 235r increases. As a result, according to the straddled vehicle 1, the rigidity of the shock-absorber attachment part 23 that includes a portion formed of fiber-reinforced resin can be further improved.

According to the straddled vehicle 1, the rigidity of the shock-absorber attachment part 23 that includes a portion formed of fiber-reinforced resin can be further improved. When the shock absorber 62 contracts, the attachment surface part 234 is pushed in the upward direction u. Therefore, tensile stress in the left-right direction lr is applied between a portion at which a force from the shock absorber 62 is applied in the attachment surface part 234 and a portion that contacts the left side-face part 2351 in the attachment surface part 234. Similarly, tensile stress in the left-right direction lr is applied between a portion at which a force from the shock absorber 62 is applied in the attachment surface part 234 and a portion that contacts the right side-face part 235r in the attachment surface part 234. Therefore, the fiber of the attachment surface part 234 extends in the left-right direction lr. By this means, the tensile strength in the left-right direction lr of the attachment surface part 234 increases. As a result, according to the straddled vehicle 1, the rigidity of the shock-absorber attachment part 23 that includes a portion formed of fiber-reinforced resin can be further improved.

According to the straddled vehicle 1, the rigidity of the shock-absorber attachment part 23 that includes a portion formed of fiber-reinforced resin can be further improved. More specifically, the tube part 231 includes at least a part of the left side-face part 2351 and at least a part of the right side-face part 235r. By this means, when the shock absorber 62 contracts, tensile stress in the up-down direction ud also arises at portions other than the left side-face part 235l and the right side-face part 235r of the tube part 231. In other words, a force that acts in the upward direction u is dispersed over the entire tube part 231. Hence, the tensile stress in the tube-part (231) up-down direction ud decreases. As a result, according to the straddled vehicle 1, the rigidity of the shock-absorber attachment part 23 that includes a portion formed of fiber-reinforced resin can be further improved.

According to the straddled vehicle 1, the rigidity of the main-member body part 22 can be improved. More specifically, the shock-absorber attachment part 23 is supported by the main-member body-part left part 2231 and the main-member body-part right part 223r. That is, the shock-absorber attachment part 23 connects the main-member body-part left part 2231 and the main-member body-part right part 223r. By this means, the main-member body-part left part 2231 and the main-member body-part right part 223r are restricted from deforming in such a way that the spacing between the main-member body-part left part 2231 and the main-member body-part right part 223r changes. As a result, according to the straddled vehicle 1, the rigidity of the main-member body part 22 can be improved.

According to the straddled vehicle 1, the left side-face part 2351 and the right side-face part 235r each extend along a direction in which the shock absorber expands and contracts as seen in the vehicle-body 2 leftward direction l or rightward direction r. Therefore, the rigidity of the shock-absorber attachment part 23 that includes a portion formed of fiber-reinforced resin can be further improved.

According to the straddled vehicle 1, the attachment surface S1 expands in a direction orthogonal to the direction in which the shock absorber 62 expands and contracts. Therefore, the rigidity of the shock-absorber attachment part 23 that includes a portion formed of fiber-reinforced resin can be further improved.

The straddled vehicle 1 also includes the bracket 63 that is provided at the upper end part of the shock absorber 62, and is attachable to the attachment surface S1. Therefore, attachment of the upper end part of the shock absorber 62 to the attachment surface S1 is facilitated. Further, since the upper end part of the shock absorber 62 is attached to the attachment surface S1 via the bracket 63, the upper end part of the shock absorber 62 can be attached in a displaceable manner to the attachment surface S1.

According to the straddled vehicle 1, exposure of the battery 9 and the control circuit 10a to moisture is suppressed. More specifically, the power unit 8, the electric motor control unit 10, the main-member body part 22, the shock-absorber attachment part 23 and the lid part 24 form a closed space. It is difficult for moisture to infiltrate into the closed space. Therefore, the battery 9 and the control circuit 10a are disposed in the closed space. By this means, exposure of the battery 9 and the control circuit 10a to moisture is suppressed.

According to the straddled vehicle 1, heavy articles are disposed in front of and behind the shock absorber 62. More specifically, the battery 9 and the electric motor control unit 10 are heavy articles. Thus, the shock absorber 62 is provided at a position that is behind the battery 9 and is in front of the electric motor control unit 10. By this means, according to the straddled vehicle 1, heavy articles are disposed in front of and behind the shock absorber 62.

Other embodiments which do not fall under the scope of the appended claims.

Note that, in the straddled vehicle 1, all of the vehicle body 2 is formed of a fiber-reinforced resin in which a resin is reinforced with fiber. However, all of the vehicle body 2 need not be formed of a fiber-reinforced resin in which a resin is reinforced with fiber. It suffices that the attachment surface part 234, the left side-face part 235l and the right side-face part 235r are formed of a fiber-reinforced resin in which a resin is reinforced with fiber. Therefore, in the vehicle body 2, portions other than the attachment surface part 234, the left side-face part 235l and the right side-face part 235r may be formed of a material (for example, a metal such as iron or aluminum) other than a fiber-reinforced resin in which a resin is reinforced with fiber.

Note that, in the straddled vehicle 1, fibers in the attachment surface part 234 extend in the left-right direction lr. However, the fibers in the attachment surface part 234 may extend in a direction (for example, the up-down direction ud) other than the left-right direction lr.

Note that, in the straddled vehicle 1, fibers of the left side-face part 2351 extend in the up-down direction ud. However, the fibers of the left side-face part 2351 may extend in a direction (for example, the left-right direction lr) other than the up-down direction ud. Moreover, in the straddled vehicle 1, fibers of the right side-face part 235r extend in the up-down direction ud. However, the fibers of the right side-face part 235r may extend in a direction (for example, the left-right direction lr) other than the up-down direction ud.

Note that, in the straddled vehicle 1, the vehicle body 2 is formed of carbon fiber-reinforced resin in which resin is reinforced with a fiber sheet including fibers. However, the vehicle body 2 may be formed of a fiber-reinforced resin in which unwoven fibers instead of the fiber sheet are used. Also, the fiber may be continuous fibers of a predetermined length (for example, not less than 1 mm), or may be discontinuous fibers.

Note that, in the straddled vehicle 1, the power unit 8 is supported by the main-member body part 22. However, the power unit 8 may be supported by a component other than the main-member body part 22. For example, the power unit 8 may be supported by a swing arm 61.

Note that, in the straddled vehicle 1, the main-member body part 22 is a box-type monocoque frame. However, the main-member body part 22 will not be limited to the box-type monocoque frame. The main-member body part 22 may be any of, for example, a single cradle frame, a double cradle frame, a semi-double cradle frame, a diamond frame, a truss frame, and a twin-spar frame. The main-member body part 22 may be a semi-monocoque frame.

Note that, in the straddled vehicle 1, the lower end of the shock absorber 62 is directly supported by the swing arm 61. However, the lower end of the shock absorber 62 may not be directly supported by the swing arm 61. The lower end of the shock absorber 62 may be supported by the swing arm 61, for example, via a link member.

Note that the straddled vehicle 1 has been supposed to be a vehicle for motorcycle trials. However, the straddled vehicle 1 may be a vehicle other than the vehicle for motorcycle trials. The straddled vehicle 1 may be any of a super-sport-type vehicle, a tourer-type vehicle, a naked-type vehicle, a cruiser-type vehicle, a scooter-type vehicle, and a motocross-type vehicle. The vehicle for motorcycle trials and the motocross-type vehicle are off-road vehicles. The super-sport-type vehicle, the tourer-type vehicle, the naked-type vehicle, the cruiser-type vehicle, and the scooter-type vehicle are on-road vehicles. The straddled vehicle 1 may be an ATV.

Moreover, the straddled vehicle 1 includes one front wheel 3. However, the straddled vehicle 1 may include two or more front wheels. Further, the straddled vehicle 1 includes one rear wheel 4. However, the straddled vehicle 1 may include two or more rear wheels.

The power unit 8 may be an engine that burns a fossil fuel such as gasoline or light oil, or an alcohol fuel such as methanol, or may be a combination of an engine and an electric motor.

Note that the battery 9 may be a battery other than the lithium ion battery. Thus, the battery 9 may be, for example, a lead storage battery, a nickel-metal hydride battery, an all-solid-state battery, or the like.

In the straddled vehicle 1, although the attachment surface part 234 is provided at the upper end of the tube part 231, the attachment surface part 234 may be provided at an intermediate part in the axial direction of the tube part 231.

In the straddled vehicle 1, although the plate 64 is not secured to the main-member body part 22, the plate 64 may be secured to the main-member body part 22. In other words, the attachment surface part 234 may be secured directly or indirectly to the main-member body part 22 at a portion thereof that is located above the attachment surface part 234.

In the straddled vehicle 1, although the shock absorber 62 is attached at the center in the left-right direction lr of the attachment surface part 234, the shock absorber 62 may be attached at a position that is offset in the leftward direction l or the rightward direction r with respect to the center in the left-right direction lr of the attachment surface part 234.

In the straddled vehicle 1, although the attachment surface part 234 is disposed at the center in the left-right direction lr of the main-member body part 22, the attachment surface part 234 may be disposed at a position that is offset in the leftward direction l or the rightward direction r with respect to the center in the left-right direction lr of the main-member body part 22.

In the straddled vehicle 1, although the spacing between the left side-face part 235l and the right side-face part 235r widens from the upper end to the lower end thereof as seen in the frontward direction f or the backward direction b, the spacing between the left side-face part 2351 and the right side-face part 235r may widen from the lower end to the upper end thereof.

In the straddled vehicle 1, the left-side-face-part supported part 2331 may be provided at the lower end of the left side-face part 235l. In the straddled vehicle 1, the right-side-face-part supported part 233r may be provided at the lower end of the right side-face part 235r.

In the straddled vehicle 1, although the main-member body part 22 is formed as a separate member to the shock-absorber attachment part 23, the main-member body part 22 may be formed integrally with the shock-absorber attachment part 23.

In the straddled vehicle 1, although the upper end part of the shock absorber 62 that supports the rear wheel 4 is attached to the shock-absorber attachment part 23 that is made of resin, for example, the upper end part of a shock absorber that supports a front wheel may be attached to a shock-absorber attachment part that is made of resin.

### REFERENCE SIGNS LIST

1: Straddled vehicle
2: Vehicle body
3: Front wheel
4: Rear wheel
5: Steering mechanism
6: Suspension
7: Seat
8: Power unit
9: Battery
10: Electric motor control unit
10a: Control circuit
10b: Heat sink
21: Head pipe
22: Main-member body part
23: Shock-absorber attachment part
24: Lid part
25: Main member
26: Swing arm
51: Handlebar
52: Steering shaft
53: Front fork
61: Swing arm
62: Shock absorber
63: Bracket
64: Plate
221: Main-member body-part upper part
222: Main-member body-part lower part
2231: Main-member body-part left part
223r: Main-member body-part right part
231: Tube part
232: Bottom face part
233l: Left-side-face-part supported part
233r: Right-side-face-part supported part
234: Attachment surface part
2351: Left side-face part
235r: Right side-face part
S1: Attachment surface

## Claims

1. A straddled vehicle (1), comprising:
a plurality of wheels including at least one front wheel (3) and at least one rear wheel (4);
a vehicle body (2) which supports the plurality of wheels and includes a main member, the main member (25) being configured to receive a load from at least one wheel among the plurality of wheels and being straddled by a rider; and
a shock absorber (62) which is supported by the vehicle body (2), the shock absorber (62) being configured to support the at least one wheel so as to absorb motion of the at least one wheel in a vehicle-body up-down direction with respect to the vehicle body (2),
wherein the main member (25) comprises:
a main-member body part (22) which the rider straddles; and
a shock-absorber attachment part (23) which is connected to the main-member body part (22) and has an attachment surface (S1) to which an upper end part of the shock absorber (62) is attached, and
wherein the shock-absorber attachment part (23) includes:
a resin-made attachment surface part (234) that includes the attachment surface (S1) to which the upper end part of the shock absorber (62) is attached, the resin-made attachment surface part (234) being formed of a fiber-reinforced resin in which resin is reinforced with fiber;
a resin-made left side-face part constituting a left side-face part (235l) that, as seen in a vehicle-body frontward direction or backward direction, extends from the attachment surface (S1) in a vehicle-body downward direction to a locationfurther leftward in a vehicle-body left-right direction than the center in the vehicle-body left-right direction of the attachment surface (S1), the resin-made left side-face part including a left-side-face-part supported part (233l) connected to the main-member body part (22), the resin-made left side-face part (235l) being formed of a fiber-reinforced resin in which resin is reinforced with fiber; and
a resin-made right side-face part constituting a right side-face part (235r) that, as seen in the vehicle-body frontward direction or backward direction, extends from the attachment surface (S1) in the vehicle-body downward direction to a location further rightward in the vehicle-body left-right direction than the center in the vehicle-body left-right direction of the attachment surface (S1), the resin-made right side-face part including a right-side-face-part supported part (233r) connected to the main-member body part (22), the resin-made right side-face part formed of a fiber-reinforced resin in which resin is reinforced with fiber, **characterised in that**
the shock-absorber attachment part (23) is formed in a cylindrical shape that includes at least a part of the resin-made left side-face part (235l) and at least a part of the resin-made right side-face part (235r), and includes a tube part (231) having an axis line extending in the vehicle-body up-down direction as seen in the vehicle-body frontward direction or backward direction, and
the resin-made attachment surface part (234) is secured to the tube part (231).

2. The straddled vehicle (1) according to claim 1, wherein
the fiber of the resin-made left side-face part (235l) and the resin-made right side-face part (235r) extends in the vehicle-body up-down direction.

3. The straddled vehicle (1) according to any one of claims 1 and 2, wherein
the fiber of the attachment surface part (234) extends in the vehicle-body left-right direction.

4. The straddled vehicle (1) according to any one of claims 1 to 3, wherein the main-member body part (22) includes:
a main-member body-part left part (223l) that is a portion located further leftward in a main-member left-right direction than the center in the main-member left-right direction, the main-member body-part left part (223l) supporting the left-side-face-part supported part (233l), and
a main-member body-part right part (223r) that is a portion located further rightward in the main-member left-right direction than the center in the main-member left-right direction, the a main-member body-part right part (223r) supporting the right-side-face-part supported part (233r).

5. The straddled vehicle (1) according to any one of claims 1 to 4, wherein
the resin-made left side-face part (235l) and the resin-made right side-face part (235r) each extend along a direction in which the shock absorber (62) expands and contracts as seen in the vehicle-body leftward direction or rightward direction.

6. The straddled vehicle (1) according to claim 5, wherein
the attachment surface (S1) expands in a direction orthogonal to a direction in which the shock absorber (62) expands and contracts.

7. The straddled vehicle (1) according to any one of claims 1 to 6, further comprising:
a bracket (63) provided at an upper end part of the shock absorber (62) and being attachable to the attachment surface (S1).

8. The straddled vehicle (1) according to any one of claims 1 to 7, wherein
as seen in the vehicle-body frontward direction or backward direction, a length in the vehicle-body left-right direction of the attachment surface (S1) is shorter than a length in the vehicle-body left-right direction of the main-member body part (22).

## Patentansprüche

1. Ein Grätschfahrzeug (1), das folgende Merkmale aufweist:
eine Mehrzahl von Rädern, die zumindest ein Vorderrad (3) und zumindest ein Hinterrad (4) aufweisen;
einen Fahrzeugkörper (2), der die Mehrzahl von Rädern trägt und ein Hauptbauteil aufweist, wobei das Hauptbauteil (25) dazu ausgebildet ist, eine Last von zumindest einem Rad unter der Mehrzahl von Rädern aufzunehmen und von einem Fahrer übergrätscht zu werden; und
einen Stoßdämpfer (62), der durch den Fahrzeugkörper (2) getragen wird, wobei der Stoßdämpfer (62) dazu ausgebildet ist, das zumindest eine Rad so zu tragen, dass eine Bewegung des zumindest einen Rads in einer Oben-Unten-Richtung des Fahrzeugkörpers in Bezug auf den Fahrzeugkörper (2) absorbiert wird,
wobei das Hauptbauteil (25) Folgendes aufweist:
einen Hauptbauteil-Körperteil (22), den der Fahrer übergrätscht; und
einen Schalldämpfer-Anbringungsteil (23), der mit dem Hauptbauteil-Körperteil (22) verbunden ist und eine Anbringungsoberfläche (S1) aufweist, an der ein oberer Endteil des Stoßdämpfers (62) angebracht ist, und
wobei der Stoßdämpfer-Anbringungsteil (23) Folgendes aufweist:
einen aus Harz gestellten Anbringungsoberflächenteil (234), der die Anbringungsoberfläche (S1) aufweist, an der der obere Endteil des Stoßdämpfers (62) angebracht ist, wobei der aus Harz hergestellte Anbringungsoberflächenteil (234) aus einem faserverstärkten Harz gebildet ist, bei dem Harz mit Faser verstärkt ist;
einen aus Harz hergestellten Linksseitenflächenteil, der einen Linksseitenflächenteil (235l) ausbildet, der sich in einer Fahrzeugkörper-Vorwärtsrichtung oder -Rückwärtsrichtung betrachtet von der Anbringungsoberfläche (S1) in einer Fahrzeugkörper-Abwärtsrichtung bis zu einem Ort erstreckt, der in einer Fahrzeugkörper-Links-Rechts-Richtung weiter links liegt als die Mitte der Anbringungsoberfläche (S1) in der Fahrzeugkörper-Links-Rechts-Richtung, wobei der aus Harz hergestellte Linksseitenflächenteil einen Linksseitenflächenteil-gestützten Teil (233l) aufweist, der mit dem Hauptbauteil-Körperteil (22) verbunden ist, wobei der aus Harz hergestellte Linksseitenflächenteil (235l) aus einem faserverstärkten Harz gebildet ist, bei dem Harz mit Faser verstärkt ist; und
einen aus Harz hergestellten Rechtsseitenflächenteil, der einen Rechtsseitenflächenteil (235r) ausbildet, der sich in einer Fahrzeugkörper-Vorwärtsrichtung oder -Rückwärtsrichtung betrachtet von der Anbringungsoberfläche (S1) in der Fahrzeugkörper-Abwärtsrichtung bis zu einem Ort erstreckt, der in der Fahrzeugkörper-Links-Rechts-Richtung weiter rechts liegt als die Mitte der Anbringungsoberfläche (S1) in der Fahrzeugkörper-Links-Rechts-Richtung, wobei der aus Harz hergestellte Rechtsseitenflächenteil einen Rechtsseitenflächenteil-gestützten Teil (233r) aufweist, der mit dem Hauptbauteil-Körperteil (22) verbunden ist, wobei der aus Harz hergestellte Rechtsseitenflächenteil aus einem faserverstärkten Harz gebildet ist, bei dem Harz mit Faser verstärkt ist,
**dadurch gekennzeichnet, dass**
der Stoßdämpfer-Anbringungsteil (23) in einer zylindrischen Form gebildet ist, die zumindest einen Teil des aus Harz hergestellten Linksseitenflächenteils (235l) und zumindest einen Teil des aus harz hergestellten Rechtsseitenflächenteils (235r) aufweist und einen Schlauchteil (231) aufweist, der eine Achsenlinie hat, die sich in der Fahrzeugkörper-Vorwärtsrichtung oder -Rückwärtsrichtung betrachtet in der Fahrzeugkörper-Oben-Unten-Richtung erstreckt, und
der aus Harz hergestellte Anbringungsoberflächenteil (234) an dem Schlauchteil (231) befestigt ist.

2. Das Grätschfahrzeug (1) gemäß Anspruch 1, bei dem
die Faser des aus Harz hergestellten Linksseitenflächenteils (235l) und des aus Harz hergestellten Rechtsseitenflächenteils (235r) sich in der Fahrzeugkörper-Oben-Unten-Richtung erstreckt.

3. Das Grätschfahrzeug (1) gemäß einem der Ansprüche 1 und 2, bei dem
die Faser des Anbringungsoberflächenteils (234) sich in der Fahrzeugkörper-Links-Rechts-Richtung erstreckt.

4. Das Grätschfahrzeug (1) gemäß einem der Ansprüche 1 bis 3, bei dem der Hauptbauteil-Körperteil (22) Folgendes aufweist:
einen Hauptbauteil-Körperteil-Linksteil (223l), der ein Abschnitt ist, der sich in einer Hauptbauteil-Links-Rechts-Richtung weiter links befindet als die Mitte in der Hauptbauteil-Links-Rechts-Richtung, wobei der Hauptbauteil-Körperteil-Linksteil (223l) den Linksseitenflächenteil-gestützten Teil (233l) trägt, und
einen Hauptbauteil-Körperteil-Rechtsteil (233r), der ein Abschnitt ist, der sich in der Hauptbauteil-Links-Rechts-Richtung weiter rechts befindet als die Mitte in der Hauptbauteil-Links-Rechts-Richtung, wobei der Hauptbauteil-Körperteil-Rechtsteil (223r) den Rechtsseitenflächenteil-gestützten Teil (233r) trägt.

5. Das Grätschfahrzeug (1) gemäß einem der Ansprüche 1 bis 4, bei dem
der aus Harz hergestellte Linksseitenflächenteil (235l) und der aus Harz hergestellte Rechtsseitenflächenteil (235r) sich jeweils entlang einer Richtung erstrecken, in der sich der Stoßdämpfer (62) in der Fahrzeugkörper-Linksrichtung oder -Rechtsrichtung betrachtet ausdehnt und zusammenzieht.

6. Das Grätschfahrzeug (1) gemäß Anspruch 5, bei dem die Anbringungsoberfläche (S1) sich in einer Richtung orthogonal zu einer Richtung ausdehnt, in der sich der Stoßdämpfer (62) ausdehnt und zusammenzieht.

7. Das Grätschfahrzeug (1) gemäß einem der Ansprüche 1 bis 6, das ferner folgendes Merkmal aufweist:
eine Halterung (63), die an einem oberen Endteil des Stoßdämpfers (62) vorgesehen ist und an der Anbringungsoberfläche (S1) anbringbar ist.

8. Das Grätschfahrzeug (1) gemäß einem der Ansprüche 1 bis 7, bei dem
in der Fahrzeugkörper-Vorwärtsrichtung oder -Rückwärtsrichtung betrachtet eine Länge der Anbringungsoberfläche (S1) in der Fahrzeugkörper-Links-Rechts-Richtung kürzer ist als eine Länge des Hauptbauteil-Körperteils (22) in der Fahrzeugkörper-Links-Rechts-Richtung.

## Revendications

1. Véhicule à selle (1), comprenant:
une pluralité de roues comportant au moins une roue avant (3) et au moins une roue arrière (4);
une carrosserie de véhicule (2) qui supporte la pluralité de roues et comporte un élément principal, l'élément principal (25) étant configuré pour recevoir une charge d'au moins une roue parmi la pluralité de roues et étant enjambé par un pilote; et
un amortisseur (62) qui est supporté par la carrosserie de véhicule (2), l'amortisseur (62) étant configuré pour supporter l'au moins une roue de manière à absorber le mouvement de l'au moins une roue dans une direction de haut en bas de la carrosserie de véhicule par rapport à la carrosserie de véhicule (2),
dans lequel l'élément principal (25) comprend:
une partie de corps d'élément principal (22) sur laquelle enjambe le pilote; et
une partie de fixation d'amortisseur (23) qui est connectée à la partie de corps d'élément principal (22) et présente une surface de fixation (S1) à laquelle est fixée une partie d'extrémité supérieure de l'amortisseur (62), et
dans lequel la partie de fixation d'amortisseur (23) comporte:
une partie de surface de fixation réalisée en résine (234) qui comporte la surface de fixation (S1) à laquelle est fixée la partie d'extrémité supérieure de l'amortisseur (62), la partie de surface de fixation réalisée en résine (234) étant formée en une résine renforcée de fibre dans laquelle la résine est renforcée par de la fibre;
une partie de face latérale gauche réalisée en résine constituant une partie de face latérale gauche (235I) qui, vue dans une direction vers l'avant ou vers l'arrière de la carrosserie de véhicule, s'étend de la surface de fixation (S1) dans une direction vers le bas de la carrosserie de véhicule vers un endroit plus à gauche dans une direction gauche-droite de la carrosserie de véhicule que le centre dans la direction gauche-droite de la carrosserie de véhicule de la surface de fixation (S1), la partie de face latérale gauche réalisée en résine comportant une partie supportée par la partie de face latérale gauche (233I) connectée à la partie de corps d'élément principal (22), la partie de face latérale gauche (235I) réalisée en résine étant formée en une résine renforcée de fibre dans laquelle la résine est renforcée par de la fibre; et
une partie de face latérale droite réalisée en résine constituant une partie de face latérale droite (235r) qui, vue dans la direction vers l'avant ou vers l'arrière de la carrosserie de véhicule, s'étend de la surface de fixation (S1) dans la direction vers le bas de la carrosserie de véhicule vers un endroit plus à droite dans la direction gauche-droite de la carrosserie de véhicule que le centre dans la direction gauche-droite de la carrosserie de véhicule de la surface de fixation (S1), la partie de face latérale droite réalisée en résine comportant une partie supportée par la partie de face droite (233r) connectée à la partie de corps d'élément principal (22), la partie de face latérale droite réalisée en résine étant formée en une résine dans laquelle la résine est renforcée par de la fibre, **caractérisé par le fait que**
la partie de fixation d'amortisseur (23) est formée de forme cylindrique qui comporte au moins une portion de la partie de face latérale gauche réalisée en résine (235I) et au moins une partie de la partie de face latérale droite réalisée en résine (235r), et comporte une partie de tube (231) présentant une ligne d'axe s'étendant dans la direction de haut en bas de la carrosserie de véhicule, telle que vue dans la direction vers l'avant ou vers l'arrière de la carrosserie de véhicule, et
la partie de surface de fixation réalisée en résine (234) est fixée à la partie de tube (231).

2. Véhicule à selle (1) selon la revendication 1, dans lequel
la fibre de la partie de face latérale gauche réalisée en résine (235I) et de la partie de face latérale droite réalisée en résine (235r) s'étend dans la direction de haut en bas de la carrosserie de véhicule.

3. Véhicule à selle (1) selon l'une quelconque des revendications 1 et 2, dans lequel
la fibre de la partie de surface de fixation (234) s'étend dans la direction gauche-droite de la carrosserie de véhicule.

4. Véhicule à selle (1) selon l'une quelconque des revendications 1 à 3, dans lequel
la partie de corps d'élément principal (22) comporte:
une partie gauche de la partie de corps d'élément principal (223l) qui est une partie située plus à gauche dans une direction gauche-droite de l'élément principal que le centre dans la direction gauche-droite de l'élément principal, la partie gauche de la partie de corps d'élément principal (223l) supportant la partie supportée de la partie de face gauche (233l), et
une partie droite de la partie de corps d'élément principal (223r) qui est une partie située plus à droite dans la direction gauche-droite de l'élément principal que le centre dans la direction gauche-droite de l'élément principal, la partie droite de la partie de corps d'élément principal (223r) supportant la partie supportée de la partie de face droite (233r).

5. Véhicule à selle (1) selon l'une quelconque des revendications 1 à 4, dans lequel
la partie de face latérale gauche réalisée en résine (235I) et la partie de face latérale droite réalisée en résine (235r) s'étendent, chacune, dans une direction dans laquelle l'amortisseur (62) se dilate et se contracte, tel que vu dans la direction à gauche ou dans la direction à droite de la carrosserie de véhicule.

6. Véhicule à selle (1) selon la revendication 5, dans lequel
la surface de fixation (S1) se dilate dans une direction orthogonale à une direction dans laquelle se dilate et se contracte l'amortisseur (62).

7. Véhicule à selle (1) selon l'une quelconque des revendications 1 à 6, comprenant par ailleurs:
un support (63) prévu à une partie d'extrémité supérieure de l'amortisseur (62) et pouvant être fixé à la surface de fixation (S1).

8. Véhicule à selle (1) selon l'une quelconque des revendications 1 à 7, dans lequel
tel que vue dans la direction vers l'avant ou vers l'arrière de la carrosserie de véhicule, une longueur, dans la direction gauche-droite de la carrosserie de véhicule, de la surface de fixation (S1) est plus courte qu'une longueur, dans la direction gauche-droite de la carrosserie de véhicule, de la partie de corps de l'élément principal (22).
